# EUROPÄISCHE PATENTSCHRIFT

(11) **EP 0 747 384 B1**
(45) Veröffentlichungstag und Bekanntmachung des Hinweises auf die Patenterteilung: **12.09.2001**
(21) Anmeldenummer: 96107850.8
(22) Anmeldetag: 17.05.1996
(51) Int. Cl.: C07F 7/12

(54) **Verfahren zur Herstellung von Alkylhydrogenchlorsilanen**
Process for the preparation of alkylhydrogenchlorosilanes
Procédé de préparation d'alkylhydrogènechlorosilanes

(30) Priorität: 07.06.1995 DE 19520737
(43) Veröffentlichungstag der Anmeldung: 11.12.1996
(73) Patentinhaber: Degussa AG, 40474 Düsseldorf (DE)
(72) Erfinder: Kropfgans, Frank, Dr., 79618 Rheinfelden (DE); Frings, Albert, Dr., 79618 Rheinfelden (DE); Horn, Michael, Dr., 79618 Rheinfelden (DE); Jenkner, Peter, Dr., 79618 Rheinfelden (DE); Kötzsch, Hans-Joachim, Dr., 79618 Rheinfelden (DE); Monkiewicz, Jaroslaw, Dr., 79618 Rheinfelden (DE); Seiler, Claus-Dietrich, Dr., 79618 Rheinfelden (DE); Srebny, Hans-Günther, Dr., 48249 Dülmen (DE); Standke, Burkhard, Dr., 79540 Lörrach (DE)

(56) Entgegenhaltungen:
- EP-A- 0 000 184
- EP-A- 0 652 221
- DE-A- 3 208 829
- DE-A- 3 436 381
- FR-A- 2 467 855

## Beschreibung

Die vorliegende Erfindung betrifft ein Verfahren zur Herstellung von Alkylhydrogenchlorsilanen der allgemeinen Formel I

Rₓ H Si Cl_{y} (I),

wobei R für gleiche oder verschiedene Alkylreste steht, x gleich 1 oder 2 und y gleich 1 oder 2 und die Summe aus x und y gleich 3 ist, durch Komproportionierung von Alkylchlorsilanen der allgemeinen Formel II

Rₐ Si Clₙ (II),

wobei R für gleiche oder verschiedene Alkylreste steht, a gleich 1 oder 2 und n gleich 2 oder 3 und die Summe aus a und n gleich 4 ist, mit Hydrogenchlorsilanen der allgemeinen Formel III

R_{b} H_{c} Si Cl_{4-b-c} (III),

wobei R für gleiche oder verschiedene Alkylreste steht, b gleich 0 oder 1 oder 2 oder 3 und c gleich 1 oder 2 oder 3 oder 4 und die Summe aus b und c kleiner gleich 4 ist.

Alkylhydrogenchlorsilane sind wichtige, u. a. stereoregulierend wirkende Katalysator-Komponenten, die z. B. bei der Polymerisation von Olefinen eingesetzt werden. Außerdem dienen solche Alkylhydrogenchlorsilane zur Einführung reaktiver Gruppen in Silikone und für die Herstellung von organofunktionellen Silanen und Schutzgruppenreagenzien.

Es ist bekannt, daß vom Verbindungstyp der allgemeinen Formel I nur das Methylhydrogendichlorsilan als Nebenprodukt in der Müller-Rochow-Synthese in großtechnischen Mengen verfügbar ist, was aber für die speziellen fortschrittlichen Anforderungen der genannten Anwendungsgebiete allein nicht ausreicht. Das in sehr geringer Konzentration ebenfalls im Rohprodukt der Müller-Rochow-Synthese vorkommende, dringend benötigte Dimethylhydrogenchlorsilan ist nur teilweise und mit erheblichem technischen Aufwand, zudem nur mit ungenügender Reinheit, isolierbar, so daß es für die möglichen großtechnischen Anwendungen so gut wie nicht zur Verfügung steht. Es ist daher schon häufiger versucht worden, andere Synthesewege zu finden.

So wurde vorgeschlagen, die Müller-Rochow-Synthese in Gegenwart von Wasserstoff durchzuführen (z. B. US-PS 4 973 725). Auf diesem Wege werden zwar sehr hohe Anteile an Methylhydrogenchlorsilanen gebildet, jedoch überwiegt auch hier das Methylhydrogendichlorsilan. Für die Herstellung von Dimethylhydrogenchlorsilan ist somit auch dieser Syntheseweg nicht wirtschaftlich und stellt auch keinen von Kopplungsprodukten unabhängigen Syntheseweg dar.

Es ist auch schon versucht worden, Dimethylchlorsilan durch katalytische Komproportionierung zu erhalten. EP-A-652 221 beschreibt ein verfahren zur Herstellung von Dimethylchlorsilan und einem Triorganochlorsilan durch Umsetzung von Dimethyldichlorsilan und einem Triorganosilan in der Gegenwart eines Lewis-Katalysators. *Voronkov* setzte Dimethyldichlorsilan mit Dihydrogenorganochlorsilanen in Gegenwart einer großen Konzentration an Friedel-Crafts-Katalysator um, indem er das gebildete Dimethylchlorsilan aus dem Reaktionsgleichgewicht abdestillierte *(M. G. Voronkov, L. A.* Abramas, Jzv. *Akad. Hauk SSSR, Ser. Khim.* 1974 *(3), 698-700).* In dieser Reaktion stellt Dihydrogenorganochlorsilan das wasserstoffliefernde Agens dar. Das Voronkov-Verfahren ist für eine großtechnische Durchführung jedoch zu aufwendig. Insbesondere der Anfall schwer entsorgbarer Rückstände in grö Berer Menge steht einer technischen Realisierung im Wege.

Dies gilt auch ganz besonders für Versuche, solche doppelt alkylierten Hydrogenchlorsilane mit Hilfe der Grignard-Reaktion herzustellen. Es wurde auch vorgeschlagen, die Hydrierung nach Voronkov in Gegenwart von auf Kieselgel immobilisierten Ammoniumhalogenid-Katalysatoren durchzuführen (DE-OS 42 40 730). Auf Kieselgelen immobilisierte Ammoniumhalogenide besitzen bei Temperaturen über 120 °C keine ausreichende Stabilität und für einen kontinuierlichen Betrieb unter den anzuwendenden Reaktionsbedingungen eine zu kurze Katalysator-Standzeit.

Der Erfindung lag daher die Aufgabe zugrunde, ein Verfahren zu entwickeln, das es ermöglicht, in einfacher und wirtschaftlicher Weise Alkylhydrogenchlorsilane der allgemeinen Formel I herzustellen.

Die gestellte Aufgabe wird erfindungsgemäß entsprechend den Angaben der Patentansprüche gelöst. Es wurde nun überraschend gefunden, daß man in einfacher wirtschaftlicher Weise eine Verbindung der allgemeinen Formel II im Gemisch mit einem wasserstoffliefernden Agens der allgemeinen Formel III in Gegenwart eines Katalysators, der zuvor mit Halogenwasserstoff gesättigt wurde, zur Reaktion bringt und mit guter Ausbeute das Alkylhydrogenchlorsilan der allgemeinen Formel I erhält. Im allgemeinen leitet man hierzu das Reaktionsgemisch unter Erwärmen über das vorbereitete Katalysatorbett; geeigneterweise wird das Rohprodukt anschließend nach bekannten destillativen Methoden aufgearbeitet.

Gegenstand der vorliegenden Erfindung ist daher ein Verfahren zur Herstellung von Alkylhydrogenchlorsilanen der allgemeinen Formel I

Rₓ H Si Cl_{y} (I),

wobei R für gleiche oder verschiedene Alkylreste steht, x gleich 1 oder 2 und y gleich 1 oder 2 und die Summe aus x und y gleich 3 ist, durch Komproportionierung von Alkylchlorsilanen der allgemeinen Formel II

Rₐ Si Clₙ (II),

wobei R für gleiche oder verschiedene Alkylreste steht, a gleich 1 oder 2 und n gleich 2 oder 3 und die Summe aus a und n gleich 4 ist, mit Hydrogenchlorsilanen der allgemeinen Formel III

R_{b} H_{c} Si Cl_{4-b-c} (III),

wobei R für gleiche oder verschiedene Alkylreste steht, b gleich 0 oder 1 oder 2 oder 3 und c gleich 1 oder 2 oder 3 oder 4 und die Summe aus b und c kleiner gleich 4 ist, das dadurch gekennzeichnet ist, daß man die Reaktion in Gegenwart eines zirken- und/oder aluminiumhaltigen, mit einem Halogenwasserstoff gesättigten Katalysators durchführt. In den allgemeinen Formeln I, II und III werden gleiche oder verschiedene Alkylreste mit R dargestellt. Hierbei kann es sich um Alkylreste mit 1 bis 18 C-Atomen handeln, die eine lineare, verzweigte oder cyclische Struktur besitzen.

Bevorzugt wird für die Umsetzung im erfindungsgemäßen Verfahren ein zirkon- und/oder aluminiumhaltiger Katalysator eingesetzt. Die Träger für diese Katalysatoren sind geeigneterweise porös und können ein Totalporenvolumen von beispielweise 0,01 bis 10 cm³/g aufweisen.

Für den Einsatz im erfindungsgemäßen Verfahren sind im allgemeinen solche Katalysatoren geeignet, deren Katalysatorträger eine BET-Oberfläche von 5 bis 500 m²/g besitzt.

Vorzugsweise wird für das erfindungsgemäße Verfahren ein Katalysator auf Zirkonoxid- und/oder Aluminiumoxid-Basis eingesetzt, wobei das jeweils vorherrschende oxidische System auch Hydroxylgruppen, insbesondere an der Katalysatoroberfläche, enthalten kann, wie sie bei amphoteren bis hin zu stark sauren anorganischen Oxidsystemen bekannt sind.
Die Zirkon- und/oder Aluminiumoxide bzw. auch deren Oxidhydroxide sind hier im allgemeinen nicht auf eine Modifikation beschränkt, bevorzugt wurde u. a. γ-Aluminiumoxid, aber auch α-Aluminiumoxid und γ-Aluminiumoxidhydroxid. Der Katalysatorträger kann strangförmig, röhrenförmig, zahnradförmig, kugelförmig, splittförmig oder auch pulverförmig ausgeführt sein.

Das erfindungsgemäße Verfahren kann in einem Rührkesselreaktor, einem Vielrohrreaktor oder in einem Festbettreaktor mit und ohne Rückführung kontinuierlich bzw. diskontinuierlich durchgeführt werden.

Als Reaktor dient vorzugsweise ein beheizbares Rohr mit Temperaturregelung, das das Katalysatorfestbett enthält und das mit den Ausgangsstoffen, wie allgemein üblich, über die Dosiereinrichtungen, eine Mischdüse, den Verdampfer und den Vorwärmer beschickt wird. Das am Reaktorausgang ankommende Rohprodukt kann entweder direkt in eine kontinuierliche Destillation geleitet oder gegebenenfalls durch Kühlung oder Quenchen verflüssigt und der destillativen Aufarbeitung zugeführt werden.

Beim erfindungsgemäßen Verfahren wird die Umsetzung vorzugsweise bei einer Temperatur zwischen 60 °C und 290 °C durchgeführt. Bevorzugt erfolgt die Umsetzung unter Normaldruck oder erhöhtem Druck, beispielsweise bis 20 bar abs.. Sie werden je nach den physikalischen und reaktiven Eigenschaften der Ausgangsstoffe gewählt, ebenso wie die mittlere Verweilzeit τ, die in der Regel zwischen einer Minute und 20 Minuten liegt, d. h. daß beim erfindungsgemäßen Verfahren die Umsetzung am Katalysator vorzugsweise über einen Zeitraum von 1 bis 20 Minuten durchgeführt wird. Die Durchführung der Reaktion erfolgt vorzugsweise unter Normaldruck, gegebenenfalls kann auch bei Unterdruck gefahren werden. Die Synthesereaktion kann jedoch auch mit Vorteilen für die Reaktivität einiger Systeme und im Hinblick auf verbesserte Raum/Zeit-Ausbeuten unter Druck und gegebenenfalls auch in flüssiger Phase ausgeführt werden, so daß im erfindungsgemäßen Verfahren die Umsetzung bevorzugt unter Normaldruck oder erhöhtem Druck durchgeführt wird.

Die katalytische Aktivität für die im erfindungsgemäßen Verfahren durchzuführende Reaktion wird im allgemeinen durch eine Behandlung des Katalysatorträgers mit einem Halogenwasserstoff bis zur Sättigung erzielt, vorzugsweise durch eine Behandlung mit Chlorwasserstoff oder Bromwasserstoff. Der Sättigungszustand ist im allgemeinen dann erreicht, wenn der Halogenwasserstoff nicht mehr aufgenommen wird, so z. B. bei einer Behandlung des Katalysatorträgers in einem Durchflußreaktor, wobei gegen Ende der Behandlung am Reaktorende Chlorwasserstoff wieder austritt. Die Behandlungstemperatur ist in der Regel nicht kritisch und kann oberhalb der Raumtemperatur liegen, beispielsweise bei Reaktionstemperatur. Vorzugsweise wird im erfindungsgemäßen Verfahren für die Umsetzung ein bei Temperaturen zwischen 180 und 200 °C mit Halogenwasserstoff gesättigter Katalysator eingesetzt.

Die Molverhältnisse, in denen die Ausgangsstoffe der allgemeinen Formeln II und III für die Umsetzung im erfindungsgemäßen Verfahren eingesetzt werden, können äquimolar sein; man kann aber auch ein Edukt im Verhältnis zum anderen mit einem 10- bis 12fachen Überschuß oder Unterschuß für die Reaktion einsetzen.

Um das gewünschte Zielprodukt in besonders guter Reinheit zu erhalten, arbeitet man das durch die Umsetzung im erfindungsgemäßen Verfahren erhaltene Rohprodukt destillativ auf, somit führt man das erfindungsgemäße Verfahren geeigneterweise kontinuierlich aus.

Als Beispiele für solche nach dem erfindungsgemäßen Verfahren herstellbaren Produkte der allgemeinen Formel I sind nachfolgend aufgeführt:
Ethylhydrogendichlorsilan,
n-Propylhydrogendichlorsilan,
Isobutylhydrogendichlorsilan,
n-Pentylhydrogendichlorsilan,
Cyclopentylhydrogendichlorsilan,
Cyclohexylhydrogendichlorsilan,
Octylhydrogendichlorsilan,
Decylhydrogendichlorsilan,
Hexadecylhydrogendichlorsilan,
Octadecylhydrogendichlorsilan,
Dimethylhydrogenchlorsilan,
Ethylmethylhydrogenchlorsilan,
Diethylhydrogenchlorsilan,
Propylmethylhydrogenchlorsilan,
Dipropylhydrogenchlorsilan,
Diisobutylhydrogenchlorsilan,
Dicyclopentylhydrogenchlorsilan,
Dicyclohexylhydrogenchlorsilan,
Cyclohexylmethylhydrogenchlorsilan,
Octadecylmethylhydrogenchlorsilan, etc..

Als Beispiele für Alkylchlorsilane der allgemeinen Formel II seien nachfolgend die Verbindungen Methyltrichlorsilan, Dimethyldichlorsilan, Ethyltrichlorsilan, Ethylmethyldichlorsilan, Diethyldichlorsilan, Propyltrichlorsilan, Propylmethyldichlorsilan, Dipropyldichlorsilan, Isobutyltrichlorsilan, Isobutylmethyldichlorsilan, Diisobutyldichlorsilan, Pentyltrichlorsilan, Cyclopentyltrichlorsilan, Cyclopentylmethyldichlorsilan, Dicyclopentyldichlorsilan, Cyclohexyltrichlorsilan, Cyclohexylmethyldichlorsilan, Dicyclohexyldichlorsilan, Octyltrichlorsilan, Decyltrichlorsilan, Hexadecyltrichlorsilan, Octadecylmethyldichlorsilan, etc., genannt.

Als Beispiele für Hydrogensilane der allgemeinen Formel III seien Trichlorsilan, Dichlorsilan, Monochlorsilan, Monosilan, Methyldihydrogenchlorsilan, Methyltrihydrogensilan, Dimethyldihydrogensilan, Ethyltrihydrogensilan, Ethylmethyldihydrogensilan, Diethyldihydrogensilan, Propyltrihydrogensilan, Propylmethyldihydrogensilan, Dipropyldihydrogensilan, Isobutyltrihydrogensilan, Isobutylmethyldihydrogensilan, Diisobutyldihydrogensilan, Cyclopentyltrihydrogensilan, Cyclopentylmethyldihydrogensilan, Dicyclopentyldihydrogensilan, Cyclohexyltrihydrogensilan, Cyclohexylmethyldihydrogensilan, Dioctyldihydrogensilan, Octadecylmethyldihydrogensilan, 2-Cyclohexenylethyltrihydrogensilan, etc., aufgeführt.

Die Erfindung wird durch die nachfolgenden Beispiele näher erläutert:

### Beispiel 1

Der senkrecht stehende Reaktor (ca. 2 Liter Füllvolumen) bestand aus einem mittels Thermostat beheizten Doppelmantelrohr aus Glas mit einem Innendurchmesser von 50 mm und einer Höhe von ca. 1 000 mm. Die Katalysatorfüllung bestand aus granuliertem γ-Al₂O₃ mit der Korngröße von 1 bis 3 mm, das bei 180 °C mit gasförmigen HCl gesättigt wurde. Das homogene Gemisch der Ausgangsprodukte wurde über einen Verdampfer und einen Vorwärmer kontinuierlich mit den in der Tabelle 1 aufgeführten Verweilzeiten, entsprechenden Dosiergeschwindigkeiten und den dort ebenfalls genannten Betriebstemperaturen absteigend in den Reaktor geführt. Das Produktgemisch wurden nach dem Reaktor in einem Kühler und einem nachgeschalteten Tiefkühler auskondensiert und schließlich nach den üblichen Methoden der Kolonnendestillation isoliert.

Tabelle 1 zeigt die Ergebnisse der Durchführung des erfindungsgemäßen Verfahren zur Herstellung von Dimethylhydrogenchlorsilan aus Dimethyldichlorsilan und Dimethylsilan unter verschiedenen für das erfindungsgemäße Verfahren beispielhaften Bedingungen.

**Tabelle 1**

| **Dimethylhydrogenchlorsilan aus Dimethylsilan und Dimethylchlorsilan** | | | | |
|---|---|---|---|---|
| Reaktions-Temperatur [°C] | Mischungsverhältnis | | Verweilzeit [min] | Ausbeute an (CH₃)₂HSiCl [%] |
| | (CH₃)₂SiH₂ [mol] | (CH₃)₂SiCl₂ [mol] | | |
| 160 | 1 | 1 | 2,8 | 84 |
| | | | 5,3 | 96 |
| | | | 8,0 | ≈ 100 |
| 80 | 1 | 1 | 8,0 | 98 |
| | | | 5,3 | 92 |
| 80 | 0,7 | 1 | 10,5 | ≈ 100 |

### Beispiel 2

### Herstellung von Dimethylhydrogenchlorsilan aus Dimethyldichlorsilan und Cyclohexyldihydrogenchlorsilan

Analog Beispiel 1 wurden aus einem Gemisch von 520 g (4 mol)Dimethyldichlorsilan und 300 g (2 mol) Cyclohexyldihydrogenchlorsilan mit einer Umsatzrate von ca. 72 % des jeweils eingesetzten Dimethyldichlorsilans in ca. 9 h bei 224 °C, einer Verweilzeit von ca. 12 Minuten und parallel laufender Destillation des Rohprodukts unter Recyclierung von Cyclohexylhydrogendichlorsilan und Dimethyldichlorsilan insgesamt 346 g (91 %) Dimethylhydrogenchlorsilan und 412 g (95 %) Cyclohexyltrichlorsilan isoliert.

### Beispiel 3

### Herstellung von Dimethylhydrogenchlorsilan aus Dimethyldichlorsilan und Methyldihydrogenchlorsilan

Analog Beispiel 1 wurde aus einem Gemisch von 1045 g (8,1 mol) Dimethyldichlorsilan und 457 g (5,67 mol) Methyldihydrogenchlorsilan in ca. 36 Betriebsstunden bei 237 °C und einer Verweilzeit von ca. 14 Minuten ein Rohprodukt nachstehender gaschromatographischer Zusammensetzung erhalten:

| | |
|---|---|
| Methyldihydrogenchlorsilan | 1,9 % |
| Methylhydrogendichlorsilan | 27,1 % |
| Dimethylhydrogenchlorsilan | 45,7 % |
| Methyltrichlorsilan | 18,0 % |
| Dimethyldichlorsilan | 7,3 % |

Die sorgfältige Destillation über eine Laborkolonne mit 40 theoretischen Böden lieferte 679 g Dimethylhydrogenchlorsilan (89 % Ausbeute, bezogen auf das eingesetzte Dimethyldichlorsilan und auf die theoretisch mögliche Übertragung an Silanwasserstoffbindungen, bzw. 67 % des insgesamt eingesetzten SiH).

### Beispiel 4

Analog Beispiel 1 wurde eine Katalysatorfüllung, bestehend aus granuliertem ZrO₂ mit der Korngröße von ca. 2 mm bei 180 °C, mit HBr gesättigt. An diesem Katalysator wurde bei 142 °C Reaktionstemperatur mit einer Verweilzeit von 16 Minuten ein Gemisch von Methylhydrogendichlorsilan und Dimethyldichlorsilan im Molverhältnis von 2,5 : 1 umgesetzt. Das resultierende Rohprodukt hatte die nachstehende gaschromatische Zusammensetzung:

| | |
|---|---|
| Methyldihydrogenchlorsilan | 0,4 % |
| Methylhydrogendichlorsilan | 48,9 % |
| Dimethylhydrogenchlorsilan | 16,8 % |
| Methyltrichlorsilan | 25,9 % |
| Dimethyldichlorsilan | 8,0 % |

In 28 Betriebsstunden wurde aus 346 g (2,68 mol) Dimethyldichlorsilan und 770 g (6,7 mol) Methylhydrogendichlorsilan ca. 1100 g Rohprodukt erhalten, aus dem 182 g Dimethylhydrogenchlorsilan destillativ isoliert wurden. Dies entspricht einer Umsatzrate für das Dimethyldichlorsilan von 72 %.

### Beispiel 5

### Herstellung von Cyclopentylhydrogendichlorsilan aus Cyclopentyltrichlorsilan und Cyclopentyldihydrogenchlorsilan

Analog Beispiel 1 wurden aus einem Gemisch von 204 g Cyclopentyltrichlorsilan und 135 g Cyclopentyldihydrogenchlorsilan, Kp. 138 °C, (Molverhältnis 1 : 1) bei 187 °C und einer durchschnittlichen Verweilzeit von 6 Minuten in ca. 2 Stunden Betriebsdauer 166 g (98 % Ausbeute) Cyclopentylhydrogendichlorsilan, Kp. 54 °C bei 1200 Pa (9 Torr), erhalten.

### Beispiel 6

### Herstellung von Dimethylhydrogenchlorsilan aus Dimethyldichlorsilan und Methylsilan

Analog Beispiel 1 wurde aus einem Gemisch von Methylsilan und Dimethyldichlorsilan im Molverhältnis von ca. 0,35 : 1 bei 195 °C und Verweilzeiten zwischen 15 und 20 Minuten das Zielprodukt in einer Ausbeute von ca. 97 % erhalten. Als Nebenprodukt trat hauptsächlich Methyltrichlorsilan auf.

### Beispiel 7

### Herstellung von Isobutylhydrogendichlorsilan aus Isobutyltrichlorsilan und Isobutylsilan

Analog Beispiel 1 wurden aus 383 g Isobutyltrichlorsilan und 177 g Isobutyltrihydrogensilan in ca. 3stündigem Betrieb bei 180 °C und ca. 4 Minuten Verweilzeit ca. 600 g (ca. 95 % Ausbeute) an Isobutylhydrogendichlorsilan, Kp. 122 °C, erhalten.

### Beispiel 8

### Herstellung von Isobutylmethylhydrogenchlorsilan aus Isobutylmethyldichlorsilan und Isobutylmethylsilan

Analog Beispiel 1 wurden Isobutylmethyldichlorsilan und Isobutylmethylsilan im Molverhältnis 1 : 1 bei 168 °C und einer Verweilzeit von ca. 10 Minuten zu Isobutylmethylhydrogenchlorsilan. Kp. 121 - 123 °C, mit einer Produktausbeute von 94 % umgesetzt. In 4 Stunden Betriebszeit wurden 171 g Isobutylmethyldichlorsilan und 102 g Isobutylmethylsilan eingesetzt und daraus 154 g Zielprodukt isoliert.

## Patentansprüche

1. Verfahren zur Herstellung von Alkylhydrogenchlorsilanen der allgemeinen Formel I
Rₓ H Si Cl_{y} (I),
wobei R für gleiche oder verschiedene Alkylreste steht, x gleich 1 oder 2 und y gleich 1 oder 2 und die Summe aus x und y gleich 3 ist, durch Komproportionierung von Alkylchlorsilanen der allgemeinen Formel II
Rₐ Si Clₙ (II),
wobei R für gleiche oder verschiedene Alkylreste steht, a gleich 1 oder 2 und n gleich 2 oder 3 und die Summe aus a und n gleich 4 ist, mit Hydrogenchlorsilanen der allgemeinen Formel III
R_{b} H_{c} Si Cl_{4-b-c} (III),
wobei R für gleiche oder verschiedene Alkylreste steht, b gleich 0 oder 1 oder 2 oder 3 und c gleich 1 oder 2 oder 3 oder 4 und die Summe aus b und c kleiner gleich 4 ist,
**dadurch gekennzeichnet, daß** man die Reaktion in Gegenwart eines zirken- und/oder aluminiumhaltigen, mit einem Halogenwasserstoff gesättigten Katalysators durchführt.

2. Verfahren nach Anspruch 1,
**dadurch gekennzeichnet, daß** für die Umsetzung ein Katalysator auf Zirkonoxid- und/oder Aluminiumoxid-Basis eingesetzt wird.

3. Verfahren nach Anspruch 1 oder 2,
**dadurch gekennzeichnet,**
**daß** für die Umsetzung ein mit Chlorwasserstoff oder Bromwasserstoff gesättigter Katalysator eingesetzt wird.

4. Verfahren nach den Ansprüchen 1 bis 3,
**dadurch gekennzeichnet,**
**daß** für die Umsetzung ein oberhalb der Raumtemperatur mit Halogenwasserstoff gesättigter Katalysator eingesetzt wird.

5. Verfahren nach Anspruch 4,
**dadurch gekennzeichnet,**
**daß** für die Umsetzung ein im Temperaturbereich zwischen 180 und 200 °C mit Halogenwasserstoff gesättigter Katalysator eingesetzt wird.

6. Verfahren nach den Ansprüchen 1 bis 5,
**dadurch gekennzeichnet,**
**daß** die Umsetzung bei einer Temperatur zwischen 60 und 290 °C durchgeführt wird.

7. Verfahren nach den Ansprüchen 1 bis 6,
**dadurch gekennzeichnet,**
**daß** die Umsetzung unter Normaldruck oder erhöhtem Druck durchgeführt wird.

8. Verfahren nach den Ansprüchen 1 bis 7,
**dadurch gekennzeichnet,**
**daß** die Umsetzung am Katalysator über einen Zeitraum von 1 bis 20 Minuten durchgeführt wird.

9. Verfahren nach den Ansprüchen 1 bis 8,
**dadurch gekennzeichnet,**
**daß** man das durch die Umsetzung erhaltene Rohprodukt destillativ aufarbeitet.

10. Verfahren nach den Ansprüchen 1 bis 9,
**dadurch gekennzeichnet,**
**daß** man das Verfahren kontinuierlich durchführt.

## Claims

1. A process for preparing alkylhydrochlorosilanes of the general formula (I)
Rₓ H Si Cl_{y} (I),
where R represents identical or different alkyl radicals, x is 1 or 2 and y is 1 or 2 and the sum of x and y is equal to 3, by comproportionation of alkylchlorosilanes of the general formula II
Rₐ Si Clₙ (II),
where R represents identical or different alkyl radicals, a is 1 or 2 and n is 2 or 3 and the sum of a and n is equal to 4,
with hydrochlorosilanes of the general formula III
R_{b} H_{c} Si Cl_{4-b-c} (III)
where R represents identical or different alkyl radicals, b is 0 or 1 or 2 or 3 and c is 1 or 2 or 3 or 4 and the sum of b and c is equal or to smaller than 4, **characterised in that** the reaction is carried out in the presence of a catalyst which contains zirconium and/or aluminium and is saturated with a hydrogen halide.

2. A process according to claim 1, **characterized in that** a catalyst based on zirconium oxide and/or aluminium oxide is used for the reaction.

3. A process according to claim 1 or 2, **characterized in that** a catalyst saturated with hydrogen chloride or hydrogen bromide is used for the reaction.

4. A process according to any of claims 1 to 3, **characterized in that** a catalyst saturated with hydrogen halide above room temperature is used for the reaction.

5. A process according to claim 4, **characterized in that** a catalyst saturated with hydrogen halide in the temperature range from 180 to 200°C is used for the reaction.

6. A process according to any of claims 1 to 5, **characterized in that** the reaction is carried out at a temperature from 60 to 290°C.

7. A process according to any of claims 1 to 6, **characterized in that** the reaction is carried out under atmospheric pressure or elevated pressure.

8. A process according to any of claims 1 to 7, **characterized in that** the reaction over the catalyst is carried out over a period of from 1 to 20 minutes.

9. A process according to any of claims 1 to 8, **characterized in that** the crude product obtained by the reaction is worked up by distillation.

10. A process according to any of claims 1 to 9, **characterized in that** the process is carried out continuously.

## Revendications

1. Procédé de préparation d'alkylhydrogénochlorosilanes de formule générale I
R_{X} H Si Cly (I),
dans laquelle R représente des restes alkyle, identiques ou différents, x est égal à 1 ou 2, et y est égal à 1 ou 2, et la somme de x et de y est égale à 3,
par co-proportionation d'alkylchlorosilanes de formule générale II
Rₐ Si Clₙ (II),
dans laquelle R représente des restes alkyle identiques ou différents, a est égal à 1 ou 2 et n est égal à 2 ou 3, et la somme de a et n est égale à 4,
avec des hydrogénochlorosilanes de formule générale III
R_{b} H_{c} Si Cl_{4-b-c} (III),
dans laquelle R représente des restes alkyle, identiques ou différents, b est égal à 0, 1 ou 2 ou 3 et c est égal à 1 ou 2 ou 3 ou 4, et la somme de b et de c est inférieure ou égale à 4,
**caractérisé en ce qu'**
on effectue la réaction en présence d'un catalyseur contenant du zirconlum et/ou de l'aluminium, saturé avec un acide halohydrique.

2. Procédé selon la revendication 1,
**caractérisé en ce qu'**
on met en oeuvre pour la réaction un catalyseur à base d'oxyde de zirconium et/ou d'oxyde d'aluminium.

3. Procédé selon la revendication 1 ou la revendication 2,
**caractérisé en ce qu'**
on met en oeuvre pour la réaction un catalyseur saturé avec de l'acide chlorhydrique ou de l'acide bromhydrique.

4. Procédé selon les revendications 1 à 3,
**caractérisé en ce qu'**
on met en oeuvre pour la réaction un catalyseur saturé avec un acide halohydrique au dessus de la température ambiante.

5. Procédé selon la revendication 4,
**caractérisé en ce qu'**
on met en oeuvre pour la réaction un catalyseur saturé avec un acide halohychique dans une plage de températures comprise entre 180 et 200°C.

6. Procédé selon les revendications 1 à 5,
**caractérisé en ce qu'**
on effectue la réaction à une température comprise entre 60 et 290°C.

7. Procédé selon les revendications 1 à 6,
**caractérisé en ce qu'**
on effectue la réaction sous pression normale ou sous pression augmentée.

8. Procédé selon les revendications 1 à 7,
**caractérisé en ce qu'**
on effectue la réaction sur le catalyseur pendant un laps de temps de 1 à 20 minutes.

9. Procédé selon les revendications 1 à 8,
**caractérisé en ce qu'**
on traite par distillation le produit brut obtenu par la réaction.

10. Procédé selon les revendications 1 à 9,
**caractérisé en ce qu'**
on exécute en continu le procédé.
